# EUROPÄISCHE PATENTSCHRIFT

(11) **EP 2 268 958 B1**
(45) Veröffentlichungstag und Bekanntmachung des Hinweises auf die Patenterteilung: **24.12.2014**
(21) Anmeldenummer: 09734384.2
(22) Anmeldetag: 06.04.2009
(51) Int. Cl.: F16L 33/207

(54) **PRESSVERBINDUNG**
COMPRESSION JOINT
LIAISON SERRÉE

(30) Priorität: 25.04.2008 DE 102008020833
(43) Veröffentlichungstag der Anmeldung: 05.01.2011
(73) Patentinhaber: HENCO Industries NV, 2200 Herentals (BE)
(72) Erfinder: HENDRICKX, Willy, B-2200 Herentals (BE)
(74) Vertreter: Starke, Günter
(86) Internationale Anmeldenummer: PCT/EP2009/002526
(87) Internationale Veröffentlichungsnummer: WO 2009/129928

(56) Entgegenhaltungen:
- EP-A- 0 879 985
- EP-A- 1 653 142
- DE-C1- 19 929 010
- DE-U1- 29 701 223
- US-A- 5 358 012

## Beschreibung

Die Erfindung betrifft eine Rohrverbindungseinrichtung zum Verbinden mit zumindest einem aus verpressbaren Material bestehenden Rohr, insbesondere einem Kunststoff-Metall-Kunststoff-Verbundrohr, wobei die Rohrverbindungseinrichtung zumindest einen Grundkörper mit einem Anschlußbereich für eine Pressverbindung mit dem Rohr aufweist, wobei der Anschlußbereich zumindest einen inneren Rohrträger mit einem Bund sowie einen den inneren Rohrträger unter Bildung eines ringförmigen Spaltes umgebenden Presshülse aufweist und der innere Rohrträger zumindest einen Rückhalteabschnitt zum Zurückhalten des aufgepressten Rohrendes und einen Dichtungsabschnitt sowie auf dem dem Bund abgewandtem freien Endteil einen Kalibrierabschnitt aufweist.

Eine derartige Rohrverbindungseinrichtung ist aus der DE 297 01 223 U1 bekannt. Diese Rohrverbindungseinrichtung weist einen inneren Rohrträger auf, der einen zu dem freien Ende des inneren Rohrträger ausgerichteten und als Kalibrierabschnitt ausgebildeten Endbereich aufweist, an den ein erster Anschnitt mit Dichtrippen anschließt Die Dichtrippen können auch als Rückhalteabschnitt fungieren. An diese Dichtrippen grenzt ein gerader Bereich an, der von einer Nut für einen Dichtring unterbrochen ist. Anschließend folgt ein zweiter Abschnitt mit Dichtrippen, an den ein weiterer gerader Abschnitt anschließt. Dieser gerade Abschnitt ist wiederum von einer Nut für einen Dichtring unterbrochen und läuft in einen Bund aus. Vor diesem Bund ist ein Isolierring angeordnet.

Eine weitere Rohrverbindungseinrichtung ist aus der EP 1 653 142 A1 bekannt. Diese Rohrverbindungseinrichtung weist einen inneren Rohrträger auf, der einen zu dem freien Ende des inneren Rohrträgers ausgerichteten und als Kalibrierabschnitt ausgebildeten Endbereich aufweist, an den ein erster Rückhalteabschnitt angrenzt. An diesen ersten Rückhalteabschnitt grenzt ein Bereich an, der mit einer Nut zur Aufnahme eines Dichtrings ausgebildet ist. An diesen Bereich grenzt ein Grat mit einem gegenüber dem Dichtring verringerten Durchmesser an, der wiederum von einer zweiten Nut zur Aufnahme eines Dichtring weitergeführt wird. An die zweite Nut schließt ein zweiter Rückhalteabschnitt an. Die beiden Dichtringe ragen jeweils deutlich aus den entsprechenden Nuten heraus.

Einen sehr ähnlichen Aufbau weist eine aus der EP 0 879 985 A1 bekannt Rohrverbindungseinrichtung auf. Bei dieser ist allerdings der dem Bund abgewandte Endbereich des inneren Rohrträgers nicht als Kalibierabschnitt ausgebildet und weiterhin ist kein zweiter Rückhalteabschnitt vorgesehen.

Aus der DE 199 29 010 C1 ist eine Rohrverbindungseinrichtung bekannt, die einen inneren Rohrträger mit einem abgeschrägten Endbereich, daran anschließend einen ersten Rückhalteabschnitt, daran anschließend eine Nut zur Aufnahme eines Dichtrings, daran wiederum anschließend einen zweiten Rückhalteabschnitt, an diesen anschließend eine zweite Nut zur Aufnahme eines zweiten Dichtrings und an diesen anschließend einen dritten Rückhalteabschnitt aufweist.

Die US 5,358,012 A offenbart eine Rohrverbindungseinrichtung, die angrenzend an einen Endbereich einen Pressbereich, dann einen mittleren Bereich und diesen weiterführend einen zweiten Pressbereich aufweist. Die beiden Pressbereiche sind gegenüber dem Endbereich und dem mittleren Bereich deutlich durchmesserreduziert.

Der Erfindung liegt die Aufgabe zugrunde, eine Rohrverbindungseinrichtung bereitzustellen, mit der sichergestellt ist, dass auch bei nicht optimalen Montagebedingungen eine zuverlässige und dichte Verbindung zwischen dem Pressfitting und dem zu verbindenden Rohr hergestellt wird.

Diese Aufgabe wird dadurch gelöst, dass der innere Rohrträger an den ersten zu dem freien Ende des inneren Rohrträgers hin eine abgerundete Oberflächenkontur aufweisenden Kalibrierabschnitt anschließend in Richtung zu dem Bund einen ersten Rückhalteabschnitt und daran anschließend einen zweiten beidseitig eine rampenförmige Oberflächenkontur aufweisenden Kalibrierabschnitt aufweist, dass an den zweiten Kalibrierabschnitt der Dichtungsbereich anschließt, dass an den Dichtungsbereich ein zweiter Rückhalteabschnitt anschließt, dass an den zweiten Rückhalteabschnitt ein dritter Kalibrierabschnitt auslaufend in den Bund anschließt, und dass der Außendurchmesser des Dichtungsbereichs und zumindest eines Rückhalteabschnitts kleiner als der des Kalibrierabschnitts ist. Dieser Ausgestaltung liegt zunächst einmal die Erkenntnis zu Grunde, dass bei der Montage solcher Rohrverbindungseinrichtungen beziehungsweise Rohrfittinge auf Baustellen beobachtet wird, dass die zur Montage abgelängten Rohre nicht immer optimal vorbereitet werden, insbesondere der sich möglicherweise bei der Ablängung bildende Innengrat nicht sauber entfernt wird und dass durch unsachgemäße Handhabung oval und/öder kreisbogenförmig verformte Rohre nicht wieder in die kreisrunde und gerade ausgerichtete Form gebracht werden. Weiterhin wird beobachtet, dass gegebenenfalls versucht wir - auch verursacht durch schwierige Montagebedingungen - den Rohrfitting nicht ih Längsrichtung zu dem Rohr ausgerichtet auf dieses aufzuschieben.

Diese möglichen Montagefehler verhindert der Gegenstand der Erfindung, indem die zylinderförmige Oberfläche des ersten Kalibrierabschnitts ein beispielsweise oval verformtes Rohr in die Kreisform zurück verformt und darüber hinaus durch seine massive Ausgestaltung bewirkt, dass ein eventuell vorhandener Innengrat an dem Rohr zumindest soweit durch eine Verformung beseitigt wird, dass er keine Beschädigung insbesondere an den Dichtungsbereich verursachen kann. Insbesondere die abgerundete Oberflächenkontur des ersten Kalibrierabschnitts bewirkt ein richtendes Aufschieben des Rohres auf den ersten Kalibrierabschnitt Der an den ersten Kalibrierabschnitt anschließende erste Rückhalteabschnitt stellt sicher, dass nach dem Pressvorgang das Rohr sicher gehalten ist. Der daran anschließende zweite Kalibrierabschnitt bewirkt nochmals die zu dem ersten Kalibrierabschnitt beschriebenen Richtvorgänge an dem Rohr und darüber hinausgehend, dass ein nicht gerade auf den Pressfitting aufgeschobenes Rohr oder ein zwar kreisrundes, aber kreisbogenförmig verbogenes Rohr gerade gebogen wird. Ergänzend dazu bewirkt insbesondere die zu dem ersten Rückhalteabschnitt weisende rampenförmige Ausgestaltung des zweiten Kalibrierabschnitts ein sanftes und beschädigungsfreies Richten eines insbesondere kreisbogenförmig verbogenen Rohres. Durch die vorhergehenden Richtvorgänge an dem Rohr ist sichergestellt, dass der Dichtungsbereich beim Aufschieben des Rohrs nicht beschädigt wird. Der Dichtungsbereich ist insbesondere durch eine umlaufende nutförmige Vertiefung in dem inneren Rohrträger gebildet, in den ein Dichtring eingesetzt ist. Der Dichtring ist bevorzugt ein gummielastischer Runddichtring, kann aber auch beliebige andere Profile aufweisen. Damit nach dem Pressvorgang eine dichte Verbindung zwischen dem Pressfitting und dem Rohr gewährleistet ist ragt der Dichtring zumindest mit einem Teil seiner äußeren Oberfläche nach außen aus der nutförmigen Vertiefung hervor. Der zweite Rückhalteabschnitt kann auch so ausgebildet sein, dass er den Dichtungsbereich beinhaltet. Das heißt, bei einer solchen Ausgestaltung ist der Dichtring im Grunde nicht in eine nutförmige Vertiefung eingesetzt sondern in eine gegebenfalls etwas vertiefte Einkerbung zwischen zwei benachbarten und umlaufenden Verzahnungsreihen, die gegebenenfalls mit noch weiteren Einkerbungen und Verzahnungsreihen die Rückhalteabschnitte bilden. Weiterhin schließt an den zweiten Rückhalteabschnitt ein dritter Kalibrierabschnitt auslaufend in den Bund an. Es ist aber auch denkbar den zweiten Rückhalteabschnitt bis in den Bund auslaufend auszubilden. Dadurch, dass der Außendurchmesser des Dichtungsbereichs und zumindest eines Rückhalteabschnitts kleiner als der des Kalibrierabschnitts ist, ist gewährleistet, dass während des Aufschiebvorgangs des Rohrs dieses insbesondere nicht mit dem Dichtungsbereich, also dem Dichtring, in Verbindung kommt. Dies hat einerseits den beschriebenen Vorteil, dass eine Beschädigung des Dichtrings ausgeschlossen ist, andererseits ist dadurch der Vorteil gegeben, dass bei der Montage noch keine dichtende Verbindung zwischen dem Pressfitting und dem Rohr hergestellt ist. Dadurch wird bei einer Dichtheitsprüfung ein nicht verpresster Pressfitting sofort erkannt, da Flüssigkeit aus diesem austritt. Hierbei ist zu berücksichtigen, dass die Kalibrierabschnitte, auch wenn diese mit ihrem Außendurchmesser in etwa dem Innendurchmesser des Rohres entsprechen, keine dichtende Verbindung herstellen. Selbst wenn die Außendurchmesser von allen Abschnitten und Bereichen gleich sind, wird die erfindungsgemäße Wirkung erreicht, da das Rohr in der beschriebenen Art und Weise gerichtet ist und daher keine Beschädigungen verursachen kann. Darüber hinaus ist auch durch den nur gering überstehenden Dichtring keine vollkommene Dichtheit (beispielsweise bei höheren Prüfdrucken gegeben, so dass auch die beschriebene Dichtheitsprüfung erfolgen kann.

In weiterer Ausgestaltung der Erfindung weist der erste Kalibrierabschnitt zu dem ersten Rückhalteabschnitt hin eine abgekantete Oberflächenkontur auf. Der dritte Kalibrierabschnitt weist zu dem benachbarten Ruckhalteabschnitt hin eine abgekantete Oberflächenkontur auf, da das Rohr an dieser Stelle bereits gerichtet ist und somit der Platz für einen auch hier denkbaren rampenförmigen Übergang für den Rückhalteabschnitt verwendet werden kann.

In Weiterbildung der Erfindung weist die Presshülse eine eingeformte, nach außen weisende Ringbördelung auf. Dabei bildet die Ringbördelung ein Ende der Presshülse und weist in dem Endbereich einen größeren Durchmesser als die Presshülse auf. Dadurch ist eine lagegenaue Fixierung der nachfolgend beschriebenen Pressbacken, die zu dem Verpressen eingesetzt werden, sichergestellt. Dabei sind auf die Presshülse zumindest zwei Pressbacken aufsetzbar, die zusammenwirkend mit der Ringbördelung eine Zentriernut und darüber hinaus zwei Pressringe aufweisen, die im Bereich der Rückhalteabschnitte unter Einschluss des Dichtungsbereichs liegen. Durch die aufgeweitete Ringbördelung ergibt sich ein erweiteter Ringspalt, der gewährleistet, dass das Rohr bei direkt in diesem Bereich angebrachten Biegungen unter keinen Umständen an der Presshülse scheuert und hier Beschädigungen auftreten.

Weiterhin ist der Grundkörper der Rohrverbindungseinrichtung einstückig aus einem Kunststoffwerkstoff, insbesondere Polyvinylidenfluorid (PVDF) gefertigt. Dieses Material hat sich als besonders geeignet erwiesen. Der Grundkörper kann beispielsweise in einem Spritzgießverfahren preiswert hergestellt sein, so daß keinerlei Nachbearbeitung erforderlich ist. Dabei kann insbesondere der erste Kalibrierabschnitt auch aus einem anderen (härteren) Kunststoffmaterial einstückig mit dem Grundkörper hergestellt sein. Der Bund weist dabei vorteilhaft einen solchen Durchmesser auf, daß die Presshülse direkt auf den Bund aufgeschoben werden kann. Die Presshülse ist bevorzugt aus Edelstahl gefertigt. Hier sind grundsätzlich auch andere nicht korrodierende Werkstoffe geeignet, Edelstahl hat sich aber als besonders vorteilhaft erwiesen. Die Presshülse ist mit einem Befestigungsende auf den Bund aufschiebbar und mit dem Befestigungsende gegen einen von dem Bund auskragenden Anschlag anschiebbar und festclipsbar. Dadurch ist durch den Anschlag eine genaue Positionierung der Presshülse gewährleistet. Weiterhin ist eine Kontrolleinrichtung in Form einer in die Presshülse eingelassenen Kontrollöffnung vorgesehen, die seitlich beabstandet zu dem Pressbereich nahe dem Bund in der Presshülse angeordnet ist. Diese Kontrollöffnung ist als beliebig geformtes Loch oder auch als ggf. bis zu dem auf dem Bund aufliegenden Ende der Presshülse geführter Schlitz ausgebildet. Die Öffnung liegt so bezogen zu dem einzuschiebenden Rohrende, daß das Rohrende die als Loch ausgebildete Öffnung vorzugsweise ganz, die als Schlitz ausgebildete Öffnung in einem Endbereich von innen bedeckt. Dadurch ist jederzeit eine gezielte Kontrolle des aufgeschobenen Rohrendes möglich. Im übrigen können mehrere Kontrollöffnungen auf den Umfang der Presshülse verteilt angeordnet sein.

Alternativ kann der Grundkörper der Rohrverbindungseinrichtung einstückig aus einem metallischen Werkstoff, beispielsweise Kupfer, Messing, Stahl oder Edelstahl gefertigt sein. Diese Materialien sind insbesondere bei sehr hohen Festigkeitsanforderungen gut geeignet. Dadurch, dass der innere Rohrträger zu dem Bund hin kreisbogenförmig ausläuft, besteht auch kein Korrosionsproblem zwischen der Metallschicht des Rohres und dem Grundkörper, da diese sich nicht berühren können.

In weiterer Ausgestaltung der Erfindung sind beidseitig an den Bund innere Rohrträger anformbar, der Bund kann als Dreieckstück ausgebildet sein, an das drei innere Rohrträger angeformt sind oder aber an den Bund kann auch beispielsweise ein Gewindeanschlußstück, ein Eckanschluß, ein Flanschanschlußstück oder ein sonstiges Anschlußstück angeformt sein. Die erfindungsgemäße Rohrverbindung ist für alle Bereiche der Installationstechnik, insbesondere der Sanitärinstallation und der Heizungsinstallation, verwendbar. Die Presshülsen weisen bei allen Varianten die gleiche Länge auf, so dass können immer die gleichen Pressbacken verwendet werden können. Die Rohrverbindung kann im übrigen für beliebige Rohrdurchmesser ausgelegt sein.

Der Verbindungsvorgang eines Rohres mit einer Rohrverbindung erfolgt in den folgenden Arbeitsschritten, Auf- beziehungsweise Einschieben des Rohres auf den inneren Rohrträger beziehungsweise in die Presshülse bis zur Anlage an den Bund, was durch die Kontrolleinrichtung überprüfbar ist; Einlegen der so vorbereiteten Rohrverbindung in das Presswerkzeug, bestehend aus zwei Pressbacken und Verpressen der Rohrverbindung wie beschrieben.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Fig. 1: eine Detailansicht einer Rohrverbindungseinrichtung mit einem eingeschobenen Rohrende im unverpressten Zustand und
- Fig. 2: eine Detailansicht einer Rohrverbindungseinrichtung mit einem eingeschobenen Rohrende im verpressten Zustand

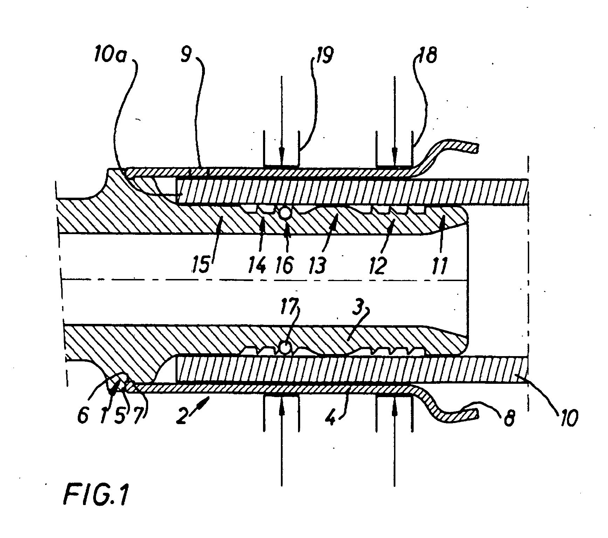

Die erfindungsgemäße Rohrverbindungseinrichtung weist gemäß Figur 1 einen Grundkörper mit einem zumindest einseitig an einen Bund 1 angeformten Anschlussbereich 2 mit einem inneren Rohrträger 3 auf.

Auf den Bund 1 ist eine Presshülse 4 anliegend an einen von dem Bund 1 auskragenden Anschlag 5 aufgeschoben. Zur unverlierbaren Festlegung der Presshülse 4 weist der Bund 1 angrenzend an den Anschlag 5 eine ringförmige Vertiefung 6 auf, in die ein endseitiger Haltevorsprung 7 (beispielsweise in Form einer Abkantung) der Presshülse 4 eingreift oder festclipsbar ist. Die Presshülse 4 reicht geringfügig über das Ende des inneren Rohrträgers 3 hinaus und weist in diesem Endbereich eine umlaufende, sich zu dem Ende hin erweiternde, Ringbördelung 8 auf. Durch die Erweiterung ist sichergestellt, dass das Rohr 10, auch wenn es direkt hinter dem Ende des inneren Rohrträgers 3 gebogen ist, nicht an der Presshülse 4 scheuert. Weiterhin ist in die Presshülse 4 eine Kontrollöffnung 9 eingelassen, die sich an den auf den Bund 1 aufgeschobenen Bereich der Presshülse 4 anschließt. Durch die Kontrollöffnung 9 ist jederzeit eine Sichtkontrolle des Rohrendes 10a möglich und somit der korrekte Sitz auf dem inneren Rohrträger 3 nachprüfbar.

Der innere Rohrträger 4 weist ausgehend von seinem von dem Bund 5 wegweisenden freien Endteil einen ersten Kalibrierabschnitt 11, daran anschließend in Richtung zu dem Bund 5 einen ersten Rückhalteabschnitt 12 und daran anschließend einen zweiten Kalibrierabschnitt 13 auf. An den zweiten Kalibrierabschnitt 13 schließt ein Dichtungsbereich 14 an diesen ein zweiter Rückhalteabschnitt 14 an. An diesen zweiten Rückhalteabschnitt 14 schließt dann noch ein dritter Kalibrierabschnitt 15 auslaufend in den Bund 5 an.

Der Außendurchmesser des Dichtungsbereichs 14 und der beiden Rückhalteabschnitte 12, 14 ist bevorzugt geringfügig kleiner ist als die Kalibrierabschnitte 11, 13, 15. Weiterhin weist der erste Kalibrierabschnitt 11 zu dem freien Ende des inneren Rohrträgers 3 hin eine abgerundete Oberflächenkontur und zu dem ersten Rückhalteabschnitt hin eine abgekantete Oberflächenkontur auf. Der zweite Kalibrierabschnitt 13 weist beidseitig eine rampenförmige Oberflächenkontur auf. Die Rückhalteabschnitte 12, 14 sind als durchgehend umlaufende Verzahnungen mit mehreren Verzahnungsreihen ausgebildet. Weiterhin ist ein Dichtungsbereich 16 vorgesehen, der bei der dargestellten Ausführungsform direkt an den zweiten Rückhalteabschnitt 14 anschließt beziehungsweise Bestandteil von diesem ist. Der Dichtungsbereich 16 weist eine umlaufende nutförmige Vertiefung auf, in die ein Dichtring 17 eingesetzt ist. Dabei ist die nutförmige Vertiefung im Grunde eine gegebenenfalls vertiefte Einkerbung zwischen zwei benachbarten Verzahnungsreihen. Der Dichtring 17 ist bevorzugt ein gummielastischer Runddichtring, kann aber auch beliebige andere Profile aufweisen. Damit nach dem Pressvorgang eine dichte Verbindung zwischen dem Pressfitting und dem Rohr 10 gewährleistet ist, ragt der Dichtring 17 zumindest mit einem Teil seiner äußeren Oberfläche nach außen aus der nutförmigen Vertiefung hervor. Dadurch, dass die Kalibrierabschnitte 11, 13, 15 einen geringfügig größeren Außendurchmesser aufweisen und zudem das Rohr durch das vorherige Passieren der Kalibrierabschnitte 11, 13 gerichtet ist, ist gewährleistet, dass der Dichtring 17 nicht beschädigt werden kann.

Von dem Presswerkzeug sind die Pressringe 18,19 in der Position, die diese in Bezug zu dem Pressfitting bei dem Pressvorgang einnehmen, dargestellt. Diese definierte Position ist durch die Ringbördelung 8 gewährleistet, die eine Führung für das Presswerkzeug darstellt.

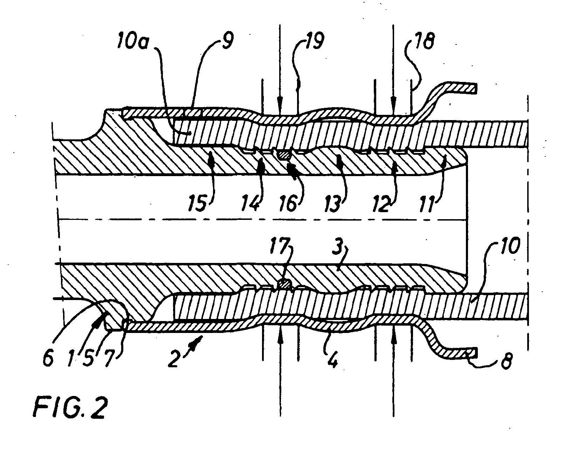

In Figur 2 ist der Pressfitting in dem verpressten Zustand dargestellt. Die umlaufenden Pressringe 18, 19 haben in die Presshülse 4 umlaufende Pressvertiefungen eingeformt, die das Rohr 10 auf denen ersten Rückhalteabschnitt 12 und den Dichtungsbereich 16 sowie den zweiten Rückhalteabschnitt 14 zur Erzeugung einer dauerhaften und dichten Verbindung drücken.

### Bezugszeichen

- 1: Bund
- 2: Anschlussbereich
- 3: innerer Rohrträger
- 4: Presshülse
- 5: Anschlag
- 6: Vertiefung
- 7: Haltevorsprung
- 8: Ringbördelung
- 9: Kontrollöffnung
- 10, 10a: Rohr
- 11: erster Kalibrierabschnitt
- 12: erster Rückhalteabschnitt
- 13: zweiter Kalibrierabschnitt
- 14: zweiter Rückhalteabschnitt
- 15: dritter Kalibrierabschnitt
- 16: Dichtungsbereich
- 17: Dichtring
- 18, 19: Presssring

## Patentansprüche

1. Rohrverbindungseinrichtung zum Verbinden mit zumindest einem aus verpressbaren Material bestehenden Rohr, wobei die Rohrverbindungseinrichtung zumindest einen Grundkörper mit einem Anschlußbereich für eine Pressverbindung mit dem Rohr aufweist und der Anschlußbereich zumindest einen inneren Rohrträger mit einem Bund sowie einen den inneren Rohrträger unter Bildung eines ringförmigen Spaltes umgebenden Presshülse aufweist, und der innere Rohrträger zumindest einen Rückhalteabschnitt zum Rückhalten des aufgepressten Rohrendes und einen Dichtungsbereich sowie auf dem dem Bund (1) abgewandtem freien Endteil einen Kalibrierabschnitt (11) aufweist,
**dadurch gekennzeichnet, dass** der innere Rohrträger an den ersten zu dem freien Ende des inneren Rohrträger (3) hin eine abgerundete Oberflächenkontur aufweisenden Kalibrierabschnitt (11) anschließend in Richtung zu dem Bund (1) einen ersten Rückhalteabschnitt (12) und daran anschließend einen zweitem beidseitig eine rampenförmige Oberflächenkontur aufweisenden Kalibrierabschnitt (13) aufweist, dass an den zweiten Kalibrierabschnitt (13) der Dichtungsbereich (16) anschließt, dass an den Dichtungsbereich (16) ein zweiter Rückhalteabschnitt (14) anschließt, dass: an den zweiten Rückhalteabschnitt (14) ein dritter Kalibrierabschnitt (15) auslaufend in den Bund (1) anschließt, und dass der Außendurchmesser des Dichtungsbereichs (16) und zumindest eines Rückhalteabschnitts (12, 14) kleiner ist als der zumindest eines Kalibrierabschnitts (11, 13, 15).

2. Rohrverbindungseinrichtung nach Anspruch 1,
**dadurch gekennzeichnet, dass** der erste Kalibrierabschnitt (11) zu dem ersten Rückhalteabschnitt (12) hin eine abgekantete Oberflächenkontur aufweist.

3. Rohrverbindungseinrichtung nach einem der vorherigen Ansprüche,
**dadurch gekennzeichnet, dass** der dritte Kalibrierabschnitt (15) zu dem zweiten Rückhalteabschnitt (14) hin eine abgekantete Oberflächenkontur aufweist.

4. Rohrverbindungseinrichtung nach einem der vorherigen Ansprüche,
**dadurch gekennzeichnet, dass** die Presshülse (4) eine eingeformte, nach außen weisende Ringbördelung (8) aufweist.

5. Rohrverbindungseinrichtung nach Anspruch 4,
**dadurch gekennzeichnet, dass** die Ringbördelung (8) ein Ende der Presshülse (4) bildet und in dem Endbereich einen größeren Durchmesser als die Presshülse (4) aufweist.

6. Rohrverbindungseinrichtung nach einem der vorherigen Ansprüche,
**dadurch gekennzeichnet, dass** auf die Presshülse (4) zumindest zwei Pressbacken aufsetzbar sind, die zusammenwirkend mit der Ringbördelung (6) eine Zentriernut und darüber hinaus zwei Pressringe (18, 19) aufweisen, die im Bereich der Rückhalteabschnitte (12, 14) unter Einschluss des Dichtungsbereichs (16) liegen.

## Claims

1. Pipe-connection unit for connecting to at least one pipe consisting of a compressible material, wherein the pipe-connection unit displays at least one basic body having a connector region for a crimp connection with the pipe, and the connector region displays at least one inner pipe support, having a flange, and a pressing sleeve which, while forming an annular gap, surrounds the inner pipe support, and the inner pipe support displays at least one retaining portion for retaining the pressed-on pipe end, and a sealing region, and on the free end part which faces away from the flange (1) a calibration portion (11),
**characterized in that** the inner pipe support, adjacent to the first calibration portion (11) in the direction of the flange (1) that, towards the free end of the inner pipe support (3) displays a rounded surface contour, displays a first retaining portion (12) and, adjacent thereto, a second calibration portion (13) which on both sides displays a ramp-type surface contour, **in that** the sealing region (16) adjoins the second calibration portion (13), **in that** a second retaining portion (14) adjoins the sealing region (16), **in that** a third calibration portion (15) adjoins the second retaining portion (14) so as to peter out into the flange (1), and **in that** the outer diameter of the sealing region (16) and of at least one retaining portion (12, 14) is smaller than that of at least one calibration portion (11, 13, 15).

2. Pipe-connection unit according to Claim 1,
**characterized in that** the first calibration portion (11), towards the first retaining portion (12), displays a bevelled surface contour.

3. Pipe-connection unit according to one of the preceding claims,
**characterized in that** the third calibration portion (15), towards the second retaining portion (14), displays a bevelled surface contour.

4. Pipe-connection unit according to one of the preceding claims,
**characterized in that** the pressing sleeve (4) has a moulded-in annular flanging (8) which points outwards.

5. Pipe-connection unit according to Claim 4,
**characterized in that** the annular flanging (8) forms one end of the pressing sleeve (4) and, **in that** end region, displays a larger diameter than the pressing sleeve (4).

6. Pipe-connection unit according to one of the preceding claims, **characterized in that** at least two die stocks which, interacting with the annular flanging (8), display a centring groove and, moreover, two pressing rings (18, 19) which lie in the region of the retaining portions (12, 14), including the sealing region (16), are placeable onto the pressing sleeve (4).

## Revendications

1. Dispositif de raccord de tuyau pour le raccordement à au moins un tuyau constitué d'un matériau pouvant être pressé, le dispositif de raccord de tuyau présentant au moins un corps de base avec une région de raccordement pour un raccord par pressage au tuyau et la région de raccordement présentant au moins un support de tuyau interne avec un épaulement ainsi qu'une douille de pressage entourant le support de tuyau interne en formant une fente annulaire et le support de tuyau interne présentant au moins une portion de retenue pour retenir l'extrémité pressée du tuyau et une région d'étanchéité ainsi qu'une portion d'étalonnage (11) sur la partie d'extrémité libre opposée à l'épaulement (1), **caractérisé en ce que** le support de tuyau interne présente une première portion de retenue (12) se raccordant à la première portion d'étalonnage (11) présentant un contour de surface arrondi vers l'extrémité libre du support de tuyau interne (3) dans la direction de l'épaulement (1) et, à la suite de celles-ci, une deuxième portion d'étalonnage (13) présentant des deux côtés un contour de surface en forme de rampe, **en ce que** la région d'étanchéité (16) se raccorde à la deuxième portion d'étalonnage (13), **en ce qu'**une deuxième portion de retenue (14) se raccorde à la région d'étanchéité (16), **en ce qu'**une troisième portion d'étalonnage (15) se terminant par l'épaulement (1) se raccorde à la deuxième portion de retenue (14), et **en ce que** le diamètre extérieur de la région d'étanchéité (16) et au moins d'une portion de retenue (12, 14) est inférieur à celui de l'au moins une portion d'étalonnage (11, 13, 15).

2. Dispositif de raccord de tuyau selon la revendication 1,
**caractérisé en ce que** la première portion d'étalonnage (11) présente un contour de surface coudé vers la première portion de retenue (12).

3. Dispositif de raccord de tuyau selon l'une quelconque des revendications précédentes,
**caractérisé en ce que** la troisième portion d'étalonnage (15) présente un contour de surface coudé vers la deuxième portion de retenue (14).

4. Dispositif de raccord de tuyau selon l'une quelconque des revendications précédentes,
**caractérisé en ce que** la douille de pressage (4) présente un bordage annulaire façonné (8) orienté vers l'extérieur.

5. Dispositif de raccord de tuyau selon la revendication 4,
**caractérisé en ce que** le bordage annulaire (8) forme une extrémité de la douille de pressage (4) et présente, dans la région d'extrémité, un plus grand diamètre que celui de la douille de pressage (4).

6. Dispositif de raccord de tuyau selon l'une quelconque des revendications précédentes,
**caractérisé en ce qu'**au moins deux mâchoires de pressage peuvent être placées sur la douille de pressage (4), lesquelles présentent, par coopération avec le bordage annulaire (8), une rainure de centrage et en outre deux bagues de pressage (18, 19) qui sont situées dans la région des portions de retenue (12, 14) en incluant la région d'étanchéité (16).
